Europäisches Patentamt

European Patent Office

Office européen des brevets

(19)

(11) Publication number: **0 157 622**
**A1**

# (12) EUROPEAN PATENT APPLICATION

(21) Application number: **85302260.6**

(22) Date of filing: **01.04.85**

(51) Int. Cl.⁴: **A 47 B 81/06**

---

(30) Priority: **02.04.84 GB 8408472**

(43) Date of publication of application: **09.10.85**
**Bulletin 85/41**

(84) Designated Contracting States: **AT BE CH DE FR GB IT LI LU NL SE**

(71) Applicant: **BROADAKER CO. LIMITED, Church Road, St. Sampsons Guernsey Channel Islands (GB)**

(72) Inventor: **Whitaker, Richard Jeffrey, Church Road, St. Sampsons Guernsey Channel Islands (GB)**

(74) Representative: **Boydell, John Christopher et al, Stevens, Hewlett & Perkins 5 Quality Court Chancery Lane, London, WC2A 1HZ (GB)**

---

(54) **Improved clamping device.**

(57) A clamping device for clamping an article (not shown) between a pair of clamping jaws (11). The jaws (11) are mounted on upstanding ends of respective auxiliary beams (14) which are themselves slidable in a main beam (12). Locking of the auxiliary beams within the main beam is effected by grub screws (18). The jaws (11) are able to swivel about the upstanding ends and have a fine adjustment provided by screws (31).

"IMPROVED CLAMPING DEVICE"

This invention relates to a clamping device for use in securing an article to a supporting structure. The device is an improved version of the clamping device described in our British patent specification 1590874.

The specification of patent 1590874 describes a clamping device in which a pair of hollow end members are slidably mounted into respective ends of a central hollow member, a long bolt and associated nut being used to screw each end member into and out of the central member, thus allowing the distance between the free ends of the end members to be adjusted. Each free end is provided with a fixed upstanding bracket, which brackets can thus be moved towards and away from one another and thus provides respective clamping surfaces which can clamp articles in the manner of the jaws of a vice. The clamping device can be used for any article, but finds particular application in the support of domestic articles such as television sets, Hi-Fi's or microwave ovens.

According to the present invention there is provided a clamping device for securing an article to a supporting structure, said clamping device comprising a tubular main beam adapted at its midpoint for attachment to the supporting structure, two auxiliary beams each slidably mounted within a respective portion of the main beam which extends between its midpoint and its free end, locking means disposed on the main beam for independently locking each auxiliary beam with respect to the main beam and respective clamping means mounted on each auxiliary beam in such a way as to clamp respective opposite faces of the article to be supported, each of said clamping means comprising a clamping jaw member having a forward face adapted to engage the article to be supported, and a rear face and means for adjustably mounting the clamping jaw member on its respective auxiliary beam in order to provide fine positional adjustment of said clamping jaw member with respect to the article to be secured.

In a preferred embodiment each clamping jaw member is mounted for rotation about an axis perpendicular to the longitudinal axis of its respective auxiliary beam.

A preferred feature of the invention is that each clamping jaw member is formed with a through slot which is elongate in a direction normal to the plane of the forward face of the respective clamping jaw, and a hole extending from the rear face of said clamping jaw member through the slot in the elongate direction, the clamping means further comprising a pin in which is disposed a threaded hole, said pin extending through the slot and being mounted on its respective auxiliary beam, and screw means extending through the hole in the clamping jaw member and meshing with the threaded hole in such a way as to urge the clamping jaw member into and out of a gripping engagement with the article upon respectively tightening and loosening of the screw means.

One embodiment of the invention will now be described by way of an example.  The description makes reference to the accompanying diagrammatic drawings in which:-

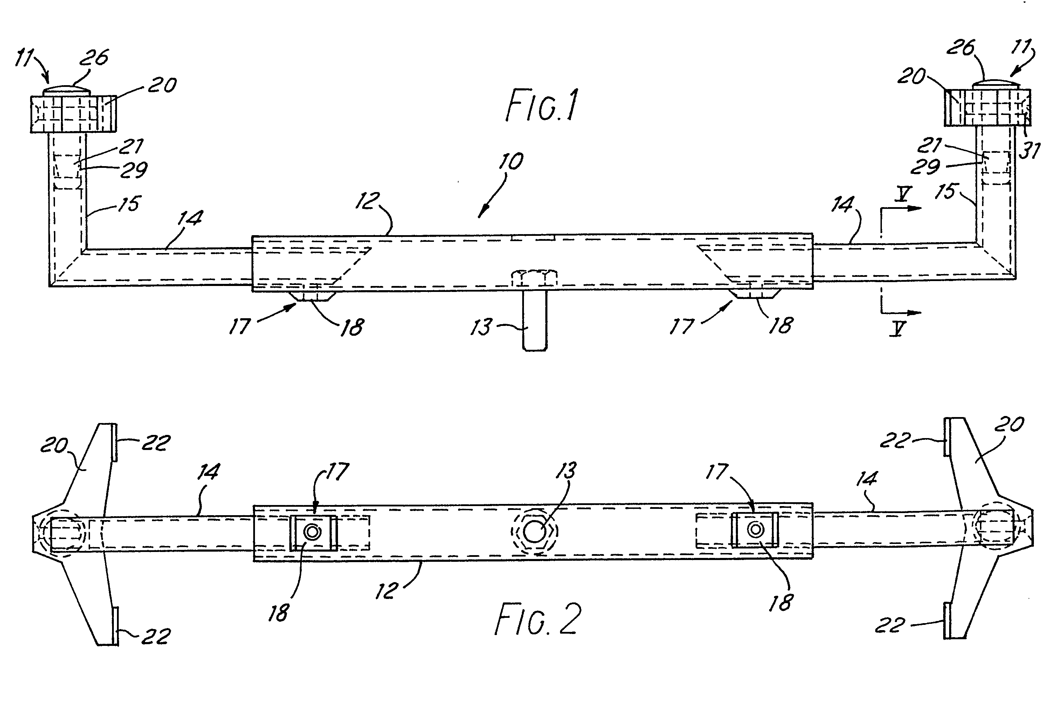

Figure 1 is a front elevation of an embodiment of a clamping device according to the invention;

Figure 2 is a view from below the device of Figure 1;

Figure 3 is a plan view of one of the clamping jaw members used in the embodiment of Figure 1;

Figure 4 is a side elevation of one of the pins used in the embodiment of Figure 1; and

Figure 5 is a cross-section of one of the auxiliary beams, taken on the line VV of Figure 1.

Referring to the drawings, the clamping device 10 comprises a tubular main beam 12 of square cross-section to which is attached at its midpoint a depending stud 13 having a threaded end by which the device may be pivotally mounted on a supporting structure (not shown). The device is normally mounted in such a way as to enable it to swivel about the stud 13 although it could also be mounted in various other ways including in a fixed mode, in work trolleys or stands.

Slidably mounted within the main beam 12 are a pair of auxiliary beams 14. Towards each end of the main beam 12 there are provided auxiliary beam locking means 17 which comprise grub screw sockets 18 which are welded to the main beam 12. The main beam 12 has holes which correspond to the sockets 18 and which permit the insertion of grub screws. Tightening of said grub screws causes their abutment against the auxiliary beams 14 thereby securing said auxiliary beams 14 against the main beam 12.

To the outer end of each auxiliary beam 14 is attached a respective upstanding portion in the form of a length 15 of similar tubular material attached vertically to the auxiliary beam, for example by welding. Clamping means 11 are mounted at the free end of each upstanding portion 15. Both clamping means 11 are identical and each comprises a clamping jaw member 20, a pin 21 and a screw means 31. Only one such clamping means shall be described below.

The clamping jaw member 20 has a forward face to which are attached two gripping pads 22 which are made from a resilient material, said gripping pads being adapted to abut the respective face of the article to be secured. The surface 23 between the pads 22 is concave in form and can accommodate any slight irregularities in the shape of the articles to be held. Midway between the pads 22 is a through slot 24 which extends in the direction of the upstanding portions 15 and which is elongate in a direction normal to the plane of the forward face of the respective clamping jaw. The jaw member 20 also has a countersunk hole 25 extending from a rear surface 30 of the jaw member through the slot in the elongate direction.

The pin 21 has a head 26 at one end, an annular groove 28 at the other end, said groove being tapered towards the head 26, and a threaded hole 27 extending laterally through the pin at a position near the head 26.

The pin 21 extends through the slot 24 in such a way that the end of the pin incorporating the annular groove 28 projects into the free end of the respective upstanding portion 15. An inwardly directed tongue 29, which is formed in the upstanding portion, is pressed towards the pin. The tongue 29 engages the annular groove 28 in order to retain the pin 21. The pin is rotatable within the upstanding portion 15 about its lengthwise axis and each clamping jaw member 20 can therefore be oriented in order to accommodate articles having non-parallel sides.

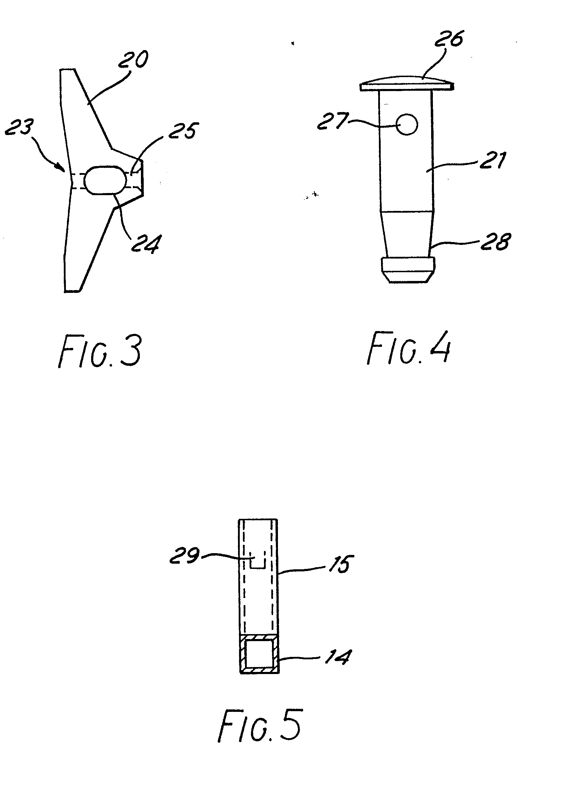

The screw means 31 is placed into the hole 25 from its end opening into the rear face 30 and is threadedly engaged with the threaded hole 27 in the pin. The screw means is tightened until the head of the screw means engages the countersunk surface of the hole 25 with the pin positioned at the left-hand end of the slot 24, when seen in Figure 3. Further tightening of the screw means urges the pin to the other end of the slot thus moving the clamping jaw member 20 forwards and causing the pads 22 to move towards the article to be secured. The loosening of the screw means will urge the pin back towards the left-hand end of the slot thus moving the clamping jaw member 20 backwards and in turn causing the pads 22 to release their grip on the article.

The device is used by first obtaining an approximate position of the clamping means 11 by loosening the grub screws 19 and sliding the auxiliary beams 14 until the pads 22 abut the article on each side and thence tightening the grub screws 19. Secure clamping of the article is subsequently obtained by tightening the screw means and thus urging the gripping pads 22 of the clamping jaw members 20 into firm contact with the article.

0157622

## CLAIMS

1.  A clamping device for securing an article to a supporting structure, said clamping device comprising a tubular main beam adapted at its midpoint for attachment to the supporting structure, two auxiliary beams each slidably mounted within a respective portion of the main beam which extends between its midpoint and its free end, locking means disposed on the main beam for independently locking each auxiliary beam with respect to the main beam and respective clamping means mounted on each auxiliary beam in such a way as to clamp respective opposite faces of the article to be supported, each of said clamping means comprising a clamping jaw member having a forward face adapted to engage the article to be supported, and means for adjustably mounting the clamping jaw member on its respective auxiliary beam in order to provide fine positional adjustment of said clamping jaw member with respect to the article to be secured.

2.  A clamping device as claimed in claim 1 wherein each clamping jaw member is mounted for rotation about an axis perpendicular to the longitudinal axis of its respective auxiliary beam.

3.  A clamping device as claimed in either one of claims 1 or 2 wherein each auxiliary beam incorporates an upstanding portion on which the respective clamping means is mounted.

4.  A clamping device as claimed in any one of the preceding claims wherein each clamping jaw member is formed with a through slot which is elongate in a direction normal to the plane of the forward face of the respective clamping jaw, and a hole extending from the rear face of said clamping jaw member through the slot in its elongate direction, and wherein the clamping means further comprise a pin in which is disposed a threaded hole, said pin extending through the slot and being mounted on its respective auxiliary beam, and screw means extending through the hole in the clamping jaw member and meshing with the threaded hole in such a way as to urge the clamping jaw member into and out of a gripping engagement with the article upon respectively tightening and loosening of the screw means.

5.     A clamping device as claimed in claims 3 and 4 wherein the pin is of circular cross-section and has at one end a head and at the other end an annular groove which tapers towards the head, said pin projecting into its respective tubular upstanding portion and said annular groove being engaged by an inwardly directed tongue which is formed in the respective upstanding portion and which is pressed towards the annular groove in order to retain the pin.

6.     A clamping device as claimed in any one of claims 1 to 5 wherein the tubular main beam and auxiliary beams are each of rectangular section.

7.     A clamping device as claimed in claim 6 wherein the tubular main beam and auxiliary beams are each of square section.

8.     A clamping device as claimed in any one of claims 1 to 7 wherein each auxiliary beam is a sliding fit within its respective portion of the main beam.

9.     A clamping device as claimed in any one of claims 1 to 8 wherein one or more strips of a resilient material are attached to the forward face of each clamping jaw member in such a way that the clamping jaw member grips the article to be secured via the resilient material.

# FIG.1

# FIG.2

Fig.3

Fig.4

Fig.5

# 0157622

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-B-1 269 311 (TORRENS) * Figures 1, 2, 6 * | 1,3 | A 47 B 81/06 |
| Y | DE-B-2 007 583 (SCHRÖDER) * Figure 1 * | 1,3,4, 9 | |
| Y | DE-U-1 962 175 (WERITZ) * Figure 1 * | 1,3,4, 6 | |
| Y | DE-U-7 019 988 (MAJA-TISCHE MANFRED JAROSCH) * Figure 2 * | 1,3,6, 7 | |
| Y | DE-U-7 343 714 (MAJA-WERK MANFRED JAROSCH) * Figure 2 * | 1,3 | TECHNICAL FIELDS SEARCHED (Int. Cl.4) |
| A | | 2 | F 16 B 2/06 A 47 B 81/06 |
| Y | FR-A-2 166 619 (RASTOLDO) * Figure 1 * | 1,3,6, 7 | |
| Y | FR-A-2 367 450 (RASTOLDO) * Figure 5 * | 1,3,8 | |
| | --- -/- | | |

The present search report has been drawn up for all claims

| Place of search | Date of completion of the search | Examiner |
|---|---|---|
| BERLIN | 11-06-1985 | ZAPP E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 374 868 (RASTOLDO)  * Figure 2 * | 1,3,6-8 | |
| Y | FR-A-2 388 528 (SOCIETE EUREX)  * Figure 5 * | 1,3,9 | |
| Y | FR-A-2 452 898 (SOCIETE DE MEUBLES MODULAIRES ET TRANSFORMABLES, SARL)  * Figure 1 * | 1 | |
| | | | **TECHNICAL FIELDS SEARCHED (Int. Cl.4)** |

The present search report has been drawn up for all claims

| Place of search BERLIN | Date of completion of the search 11-06-1985 | Examiner ZAPP E |
|---|---|---|